# EUROPEAN PATENT APPLICATION

(11) **EP 1 241 391 A1**
(43) Date of publication of application: **18.09.2002**
(21) Application number: 02425145.6
(22) Date of filing: 13.03.2002
(51) Int. Cl.: F16L 41/03, F16L 47/00

(54) **Multiple wall-mountable compressed air distributor manufactured from plastic**

(30) Priority: 16.03.2001 IT BO20010021 U
(71) Applicant: E. Vescogni Rappresentanze s.a.s. di E.Vescogni & C., 40011 Anzola Emilia (BO) (IT)
(72) Inventor: Vescogni, Ermanno, 40011 Anzola Emilia (BO) (IT)
(74) Representative: Trentini, Ermanno, Ing.

(57) **Abstract**

The invention regards a multiple compressed air distributor manufactured from plastic, which may be conveniently fastened with brackets to the supporting wall and which may accommodate pressure outlets on the front and sides, also for units of considerable dimensions, and whose design allows the compressed air supply tube to be positioned perpendicularly.

## Description

The present invention regards a multiple compressed air distributor completely made of plastic, which may be fastened to the wall using perforated brackets incorporated in the distributor itself.

With specific reference to pneumatic system accessories of this type, it may be affirmed that although such accessories have existed for some time, none have the functional versatility of this model, which, thanks to its particular conformation, can permit multiple front connections with sufficient space for manoeuvring control levers and above all side connections for "units" that may even be of considerable depth.

In this manner, the invention eliminates, first and foremost, the limitations associated with the connection devices currently available, such as the inconvenience of fastening them to the wall, of having to limit the number of air outlets and of being unable to install units of large dimensions.
The aforesaid limitations had already been overcome by Model BO2000U000044 registered by the applicant, manufactured from anodised aluminium or an equivalent metal, believed at that time to be better able to guarantee strength.

An accurate engineering of the thickness of the walls through which the compressed air passes has made it possible to obtain the distributor to which this patent pertains by means of a moulding process; the distributor, manufactured from Nylon 5/6, is of equal strength, and what is more, the paths followed by the ducts need not be rectilinear, as in the case of metal, and are therefore better suited to the purposes of the invention. The device conceived according to this invention achieves these and other aims; it basically consists of a prism-shaped casing that extends vertically according to the number of outlets it will hold, and whose front is sufficiently wide to hold both the compressed air inlet and condensation drainage outlets (no longer coaxial) as well as the user supply outlets; the depth will be at least twice the front width, with perforated brackets incorporated in the sides, for the full vertical length.
These and other features will now become more evident in the description a simple form of execution of the invention, which serves purely illustrative purposes and in no way limits the scope of this patent.

Referring to the enclosed diagrams, where:

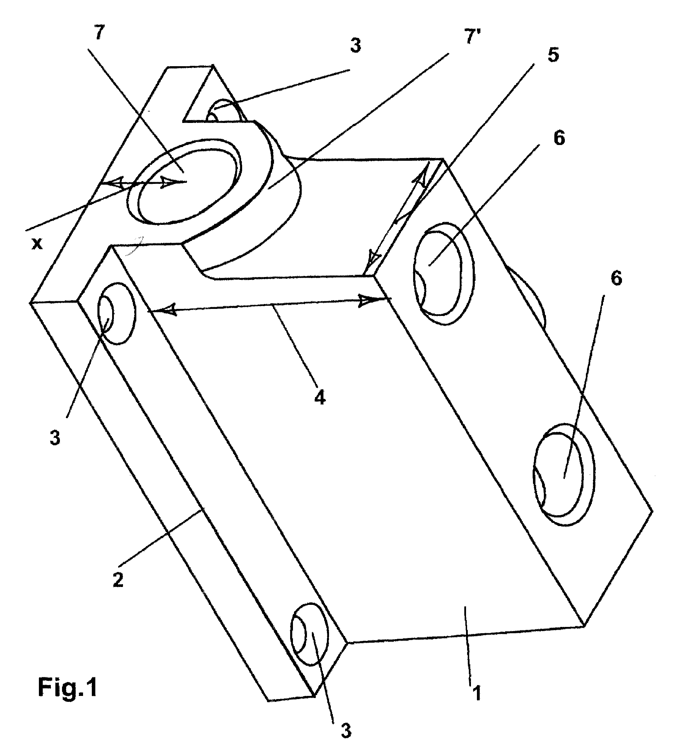

Fig. 1 shows a view of the invention, as seen from the right side.

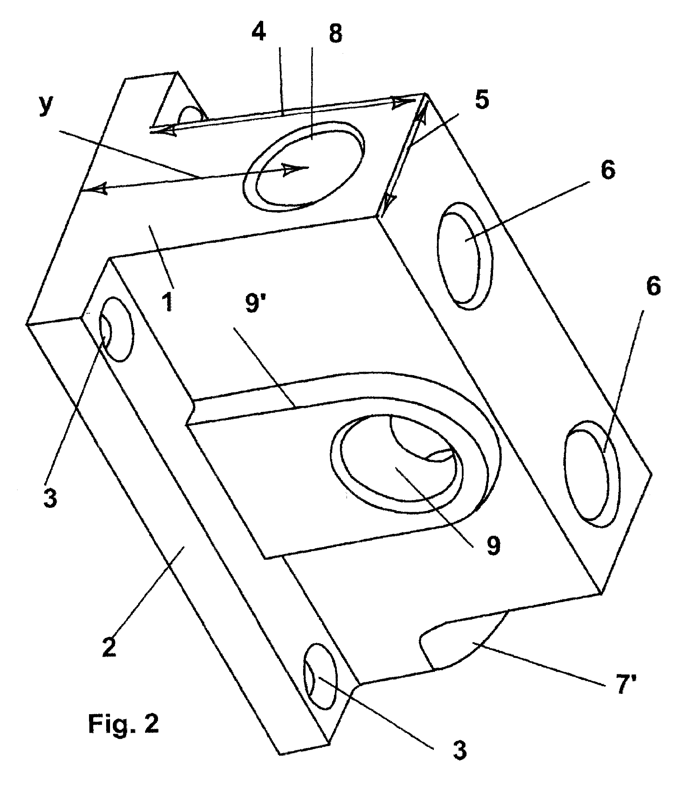

Fig. 2 shows a view of the invention, as seen from the left side.

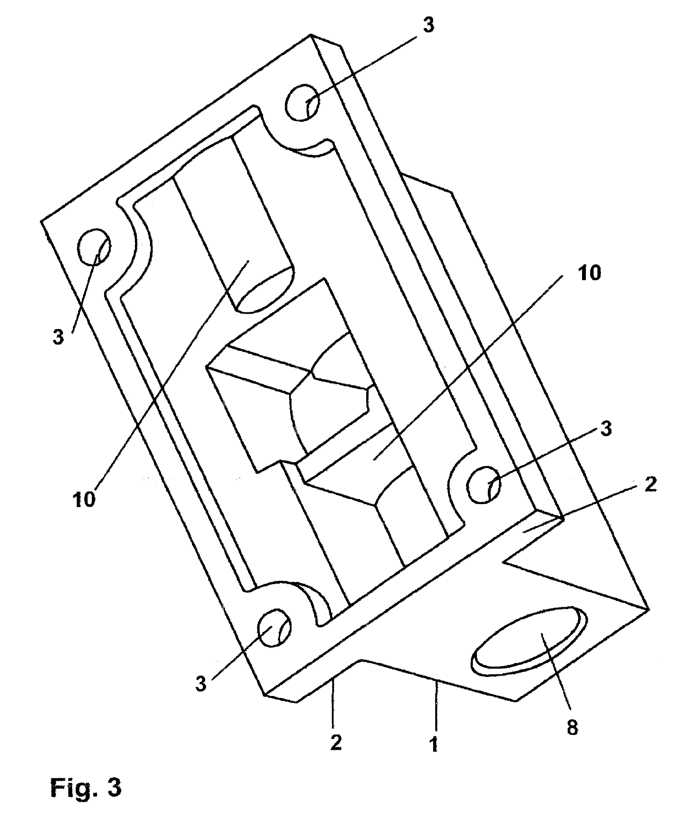

Fig. 3 shows a view of the invention, as seen from below.

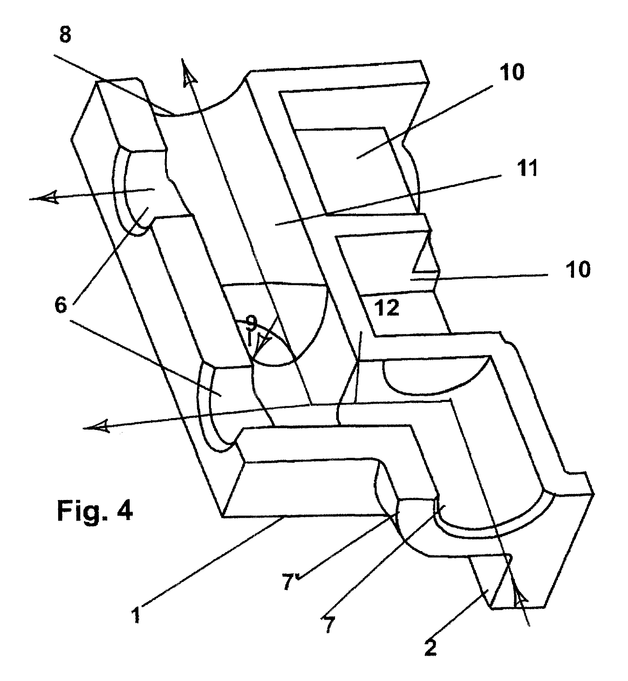

Fig. 4 shows a cross-sectional view of the invention

With reference to these figures, 1 indicates the casing of the distributor, whose overall shape is like a "T", including the "wings" indicated by the number 2, serving as brackets, suitably perforated in 3 so that they may be fastened with screws to the supporting wall, 4 indicates the depth, at least twice the dimension 5, which represents the front width of the distributor, proportioned according to the diameter of the user air outlets 6 - of a standard type for compressed air - and especially the larger diameter of the inlet indicated by the number 7, with reinforcement collar 7', through which air is supplied to the distributor; 8 indicates the condensation drainage outlet, which is not on an axis with the air intake (7); the latter must be at a smaller distance X from the supporting wall (approximately 18 cm) since the supply tube must be perpendicular to the distributor whereas the condensation container, given its dimensions, must be spaced at a larger distance Y from the wall (approximately 40 cm); 9 indicates the lateral outlet for the device comprising filter, reducing valve, pressure gauge and lubricator and 9' the projecting reinforcement for the hole (9).
10 indicates the solid ridges, lightening hollows and discharge channels typical of moulded products, 11 indicates the complete path followed by the compressed air, 12 the elbow of the tubing which allows the air supply inlet (7) and condensation discharge outlet (8) to be on a different axis vis-à-vis the supporting wall where the distributor is mounted.

In practice, the details of execution, dimensions, materials and other features of the invention may vary without exceeding the domain of this industrial patent right. The invention thus conceived is indeed open to many modifications and variations. All the components may also be replaced with others that are technically equivalent.

## Claims

1. "MULTIPLE WALL-MOUNTABLE COMPRESSED AIR DISTRIBUTOR MANUFACTURED FROM PLASTIC"
comprising a hollow casing (1) allowing the passage of compressed air that is supplied through inlet (7) and will be distributed through various outlets to different types of users, and which also includes a condensation discharge outlet (8); the distributor is distinguished by the fact that it is manufactured completely from plastic (e.g. Nylon 6/6) and by its "T-shape" conformation with the wing (2) to be fastened with screws to the wall and the casing (1) projecting outwards, to reach a depth (4) at least double the front width (5); it is also **characterised by** the presence of a union elbow (12) between the air intake tube and the condensation discharge tube, which allows the air inlet (7) and discharge outlet (8) to be positioned on different axes. The version of the invention described herein is further **characterised by** the presence of two pressure outlets (6) spaced sufficiently apart to allow easy manoeuvring of control levers, where present, and a pressure outlet (9) positioned on the side and serving units of greater dimensions.

2. "MULTIPLE WALL-MOUNTABLE COMPRESSED AIR DISTRIBUTOR MANUFACTURED FROM PLASTIC"
as described in the principal claim above, **characterised by** the fact that the number of pressure outlets (6) may be reduced to one or increased to three or more, in different versions of the invention.

3. "MULTIPLE WALL-MOUNTABLE COMPRESSED AIR DISTRIBUTOR MANUFACTURED FROM PLASTIC"
as described in the previous claims, **characterised by** the fact that the holes (7) and (9) are reinforced with collars (7') and (9') and that solid ridges, lightening hollows and discharge channels (10) are present on the bottom part of the distributor.

4. "MULTIPLE WALL-MOUNTABLE COMPRESSED AIR DISTRIBUTOR MANUFACTURED FROM PLASTIC"
as described in the previous claims, **characterised by** the fact that the invention is substantially as described and/or illustrated.
